# EUROPEAN PATENT APPLICATION

(11) **EP 2 618 234 A1**
(43) Date of publication of application: **24.07.2013**
(21) Application number: 12151444.2
(22) Date of filing: 17.01.2012
(51) Int. Cl.: G06F 1/16, G06F 3/048

(54) **Portable device holstering response**

(71) Applicant: Research In Motion Limited, Waterloo, ON N2L 3W8 (CA)
(72) Inventor: Files, Jace William, Irving TX 75039 (US); Pertuit, Michael Joseph, Prosper TX 75078 (US)
(74) Representative: Noble, Nicholas

(57) **Abstract**

A portable device automatically stores information (including, if desired, a timestamp) regarding user-interface interactions and then, in response to detecting holstering of the portable device, automatically uses that information to revert to an earlier user-interface interaction-directed state when at least one reversion criterion is also met. The reversion criterion can comprise a set duration of time. This use of the information to revert to an earlier user-interface interaction-directed state can comprise deleting at least some of the information from storage to identify the particular user-interface interaction to be used to determine the earlier user-interface interaction-directed state.

## Description

### Technical Field

This disclosed concept relates generally to portable devices and more particular to the holstering and unholstering of portable devices.

### Background

Portable devices of various kinds are known in the art. These include, but are not limited to, portable communications devices such as so-called smartphones. Many users carry these devices in a holster in order to protect the device while also maintaining the device at the ready.

Many such portable devices detect when they are holstered. In some cases, for example, the holster includes one or more small magnets that the portable device detects to sense a holstered state.

Holsters often receive a corresponding portable device in a conformal manner. As a result, surfaces of both contact one another as the holster receives the portable device. When this movement accidentally causes contact that activates a user-input interface of the portable device (such as, for example, a touch-screen display, a trackball, a keypad, and so forth), holstering and/or unholstering the portable device may cause the device to assume an unintended (by the user) corresponding user-interface interaction-directed state (i.e., a device operating state that results per a particular physical interaction with the device's user-input interface such as a selection click entered via a trackball or trackwheel).

### Brief Description of the Drawings

FIG. 1 comprises a block diagram as configured in accordance with various examples of the disclosed concept;

FIG. 2 comprises a flow diagram as configured in accordance with various examples of the disclosed concept;

FIG. 3 comprises a top plan view as configured in accordance with various examples of the disclosed concept;

FIG. 4 comprises a top plan view as configured in accordance with various examples of the disclosed concept; and

FIG. 5 comprises a top plan view as configured in accordance with various examples of the disclosed concept.

Elements in the figures are illustrated for simplicity and clarity and have not necessarily been drawn to scale. For example, the dimensions, relative positioning, or both of some of the elements in the figures may be exaggerated relative to other elements to help to improve understanding of various embodiments of the present disclosed concept. Also, common but well-understood elements that are useful or necessary in a commercially feasible embodiment are often not depicted in order to facilitate a less obstructed view of these various embodiments of the present disclosed concept. Certain actions or steps may be described or depicted in a particular order of occurrence while those skilled in the art will understand that such specificity with respect to sequence is not actually required. The terms and expressions used herein have the ordinary technical meaning as is accorded to such terms and expressions by persons skilled in the technical field as set forth above except where different specific meanings have otherwise been set forth herein.

### Detailed Description

Generally speaking, pursuant to these various examples, a portable device automatically stores information regarding user-interface interactions and then, in response to detecting holstering of the portable device, automatically uses that information to revert to an earlier user-interface interaction-directed state when at least one reversion criterion is also met.

By one approach, the reversion criterion comprises a duration of time such as a set, predetermined period of time. When the use of the information to revert to an earlier user-interface interaction-directed state comprises, at least in part, deleting at least some of the information from storage to thereby identify the earlier user-interface interaction-directed state, this duration of time facilitates deleting information for user-interface interactions that occurred just prior to detecting the holstering of the portable device.

By one approach the described storage of information can include storing a timestamp for each of at least some of the particular user-interface interactions. In this case, using the information to revert to an earlier user-interface interaction-directed state comprises using the timestamp to identify the particular user-interface interaction to be used to determine the earlier user-interface interaction-directed state.

Using this approach, for example, the portable device can utilize timestamps that correspond to various trackball manipulations by the user to identify the trackball manipulations that immediately precede the holstering of the portable device as well as those trackball manipulations that occurred when holstering and unholstering the portable device. The portable device can then use such information to delete or ignore trackball manipulations that occurred when holstering/unholstering the portable device and to rely instead upon that trackball manipulation (or manipulations) that occurred just prior to holstering the portable device when presenting a particular operating state to the user upon unholstering the portable device.

So configured, a user can retrieve their portable device from their holster and find their portable device in a same operating state as just prior to holstering the portable device, notwithstanding that one or more physical interactions between the holster and the user interface entered one or more user-interface inputs that led to other operating states. This configuration can save time for the user and contribute to a more intuitive and natural user experience. As a simple illustrative example in these regards, such an approach will permit a portable device that had been in a calendar operating state when holstered to present that same calendar operating state to the user when unholstered even when physical interaction between the holster and the portable device's user interface during holstering had caused the operating state to be directed to a telephone number dialing state.

These teachings can be implemented in a highly cost-effective manner and can also be readily retro-installed in many already-fielded portable devices. This ease of implementation, in turn, contributes to further leveraging already-existing devices and extending their useful lives. Such approaches are also flexible in practice and are highly scalable to accommodate a wide variety of portable devices (and a wide variety of user interfaces) as well as a wide variety of holsters and holster configurations.

These and other benefits may become clearer upon making a thorough review and study of the following detailed description. This disclosure generally relates to an electronic device, which is a portable electronic device in the embodiments described herein. Examples of portable electronic devices include mobile, or handheld, wireless communication devices such as pagers, cellular phones, smartphones, wireless organizers, personal digital assistants, wirelessly-enabled notebook computers, tablet computers, and so forth. The portable electronic device may also be a portable electronic device without wireless communication capabilities, such as a handheld electronic game device, digital photograph album, digital camera, or other device.

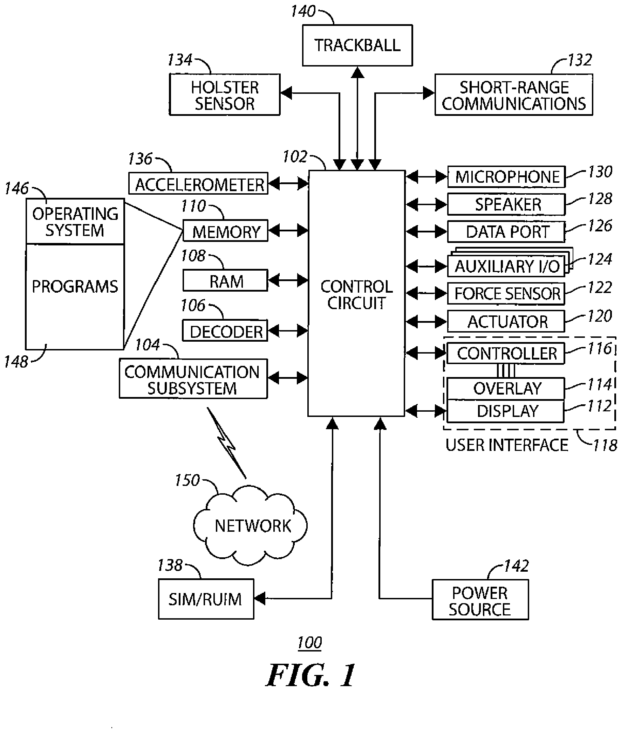

FIG. 1 depicts a block diagram of an example of a portable electronic device 100. The portable electronic device 100 includes multiple components, such as a control circuit 102 that controls the overall operation of the portable electronic device 100. Such a control circuit 102 can comprise a fixed-purpose hard-wired platform or can comprise a partially or wholly programmable platform such as a processor of choice. All of these architectural options are well known and understood in the art and require no further description here.

Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The control circuit 102 interacts with other components, such as Random Access Memory (RAM) 108, memory 110, a user interface comprising a display 112 having a touch-sensitive overlay 114 operably coupled to an electronic controller 116 that together comprise a touch-sensitive display 118, one or more optional actuators 120, one or more force sensors 122, an auxiliary input/output (I/O) subsystem 124, a data port 126, a speaker 128, a microphone 130, short-range communications 132, and a holster sensor 134 (such as, but not limited to, a magnetic sensor that detects an appropriately-placed magnet in a holster). Other subsystems can be included as desired (including, for example, a location-detection component such as a Global Positioning System (GPS) receiver).

User-interaction with a graphical user interface is performed through the touch-sensitive overlay 114. The control circuit 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the control circuit 102. Navigation and/or text or icon selection can be effected through contact with the touch-sensitive display 118 and/or, in this illustrative example, a trackball 140. The control circuit 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 in this illustrative example includes an operating system 146 and software programs or components 148 that are executed by the control circuit 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem.

A received signal such as a text message, an e-mail message, or web page download is processed by the communication subsystem 104 and input to the control circuit 102. The control circuit 102 processes the received signal for output to the display 112 and/or to the auxiliary I/O subsystem 124. A subscriber may generate data items, for example e-mail messages, that may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

The actuator(s) 120, when present, may be depressed or activated by applying sufficient force to the touch-sensitive display 118 to overcome the actuation force of the actuator 120. The actuator(s) 120 in this illustrative example may be actuated by pressing anywhere on the touch-sensitive display 118. The actuator(s) 120 may provide input to the control circuit 102 when actuated. Actuation of the actuator(s) 120 may result in provision of tactile feedback. When force is applied, the touch-sensitive display 118 is depressible, pivotable, and/or movable. Such a force may actuate the actuator(s) 120. The touch-sensitive display 118 may, for example, float with respect to the housing of the portable electronic device, i.e., the touch-sensitive display 118 may not be fastened to the housing. A mechanical dome switch actuator may be utilized. In this example, tactile feedback is provided when the dome collapses due to imparted force and when the dome returns to the rest position after release of the switch. Alternatively, the actuator 120 may comprise one or more piezoelectric (piezo) devices that provide tactile feedback for the touch-sensitive display 118.

Optional force sensors 122 may be disposed in conjunction with the touch-sensitive display 118 to determine or react to forces applied to the touch-sensitive display 118. The force sensor 122 may be disposed in line with a piezo actuator 120. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities.

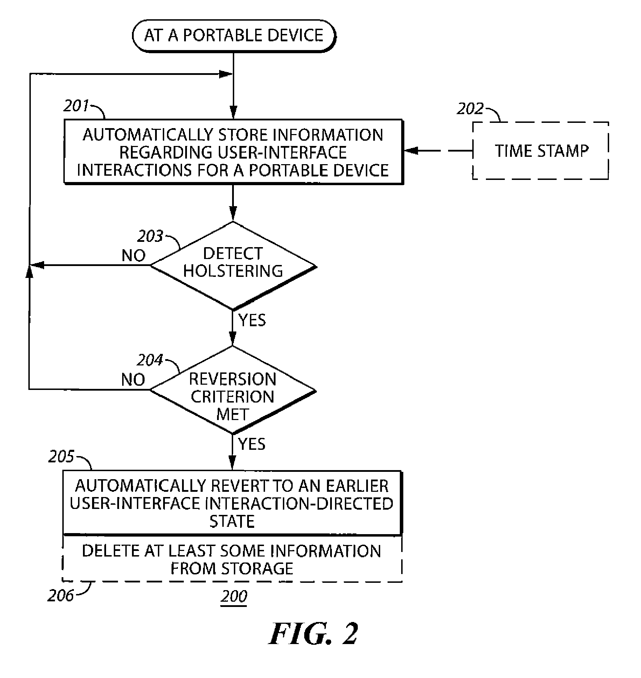

Referring to FIG. 2, an illustrative process 200 that is compatible with many of these teachings is presented. This process 200 serves to mitigate or even avoid unintended changes of the operating state of such a device when contact between, for example, the aforementioned trackball 140 or touch-sensitive display 118 and a holster occurs when holstering the device. By one approach, the aforementioned control circuit 102 can be configured to carry out one or more of the described actions (via, for example, appropriate programming).

The process 200 provides for automatically storing 201 information regarding user-interface interactions for the portable device. These teachings will accommodate a wide range of user-interface interactions including but not limited to button assertions, trackball and trackwheel movement and clicking, touch-sensitive display screen and/or trackpad "touches," and so forth. Per one approach, information regarding these interactions with the user interface are stored regardless of whether the interaction is the result of a direct user interaction (such as an intended direct contact between the user interface and the user's finger) or an indirect and/or unintentional interaction between the user interface and a portion of a holster for the portable device.

By one approach this storing comprises storing information regarding each and every user-interface interaction. This storing might comprise, for example, storing information regarding an assertion (by whatever means) of each physical key, each virtual key, and each navigation event and selection effected via a trackball or other cursor-control or scrolling-control mechanism. By way of illustration and without intending any limitations in these regards, this storing could comprise storing information that specifically identifies particular user-interface assertions such as, by way of example, assertion of the physical key that corresponds to the letter "D," assertion of a soft key and the particular functionality assigned to that soft key at the time of assertion, and trackball selection of a particular value or function, to note but a few.

By one approach, this automatic storage of such information can include maintaining the storage of that information for an essentially indefinite period of time or for an essentially indefinite number of user-interface interactions (at least until purposefully electing to delete certain items of information pursuant to some criterion of choice). By another approach, such stored items can be expunged from memory (prior to use) as a function, for example, of time or on a first-in-first-out basis.

By one approach, this storage of information can include storing a timestamp 202 for each of at least some, and all if desired, of the particular user-interface interactions. The control circuit 102 can source this timestamp 202, if desired, using an internal local clock or by use of any other clock source of choice. So configured, stored user-interface interactions have a corresponding time stamp to indicate, for example, the relative age of these interactions.

This process 200 then provides for detecting 203, at least from time to time, holstering of the portable device. This detecting can comprise, for example, monitoring for such a condition on some generally-regular basis. This detecting can also comprise, if desired, detecting such an occurrence essentially in real time by configuring the detection of such an event as a real-time interrupt for the control circuit 102.

Upon detecting 203 holstering, this process 200 then provides for determining 204 whether a specific reversion criterion has been met (or whether, if desired, a plurality of reversion criteria have been met). By one approach, this reversion criterion comprises a duration of time such as, for example, half a second, one second, two seconds, or some other duration of choice as may be relevant to a given application setting. In such a case, this determination 204 can comprise determining whether any user-interface interactions were stored as per the foregoing in an immediately preceding period of time that corresponds to the reversion criterion (by using, for example, the aforementioned timestamp information for user-interface assertions). If not, this process 200 can simply loop back and carry on as described above.

When circumstances meet the reversion criterion, however, this process 200 provides for automatically 205 using the stored information to revert to an earlier user-interface interaction-directed state. This can include, for example, using the aforementioned timestamps to identify the particular user-interface interaction to be used to determine the earlier user-interface interaction-directed state to which the device shall revert. For example, this process 200 can provide for using a user-interface interaction-directed state having a corresponding time stamp that has a predetermined relationship with respect to the duration of time (for example, the timestamp is the least aged but outside the aforementioned reversion-criterion duration of time).

If desired, this automatic reversion capability can optionally include automatically deleting 206 at least some of the information from storage to thereby identify the earlier user-interface interaction-direction state. By one approach this can comprise deleting the information for user-interface interactions having timestamps that come within the aforementioned duration of time to thereby highlight and identify the first user-interface interaction having a timestamp that is older than the duration of time.

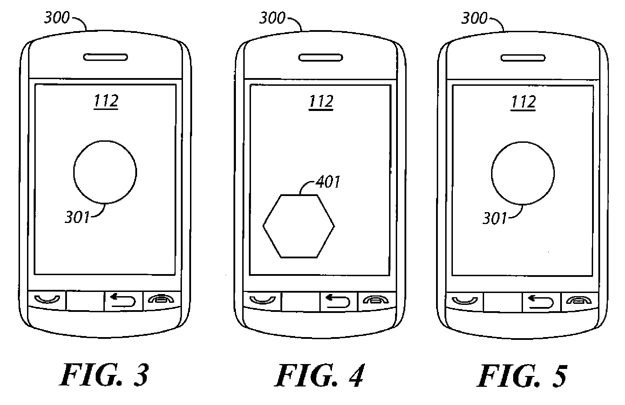

FIGS. 3 through 5 provide an illustrative working example in these regards. The specifics of this example are not intended as being suggestive of any particular limitations with respect to the practice of these teachings.

In this simple example, a portable communication device 300 timestamps and stores information regarding user-interface interactions. In addition, this device 300 uses a period of time of one second as a reversion criterion. Prior to being holstered this portable communication device 300 has a present user-interface interaction-directed state as symbolized by the circle 301 shown on the device's display 112 in FIG. 3.

During the holstering process, physical interaction between the holster (not shown) and one or more user interfaces of the portable communications device 300 cause the portable communications device 300 to have a new user-interface interaction-directed state as symbolized by the hexagon 401 shown on the device's display 112 in FIG. 4. In this example, however, these particular user-interface interactions occurred within the one second of time that immediately precedes when the portable communications device 300 detects being holstered. As a result, the portable communications device 300 deletes those particular user-interface interactions (based upon their timestamps) and the portable communications device 300 reverts back to its pre-holstered user-interface interaction-directed state as shown in FIG. 5.

So configured a user will not as likely be confronted with a portable device having a post-holstering state that differs from the device's pre-holstering state. This, in turn, can avoid confusion, undesired actions, and delay.

Those skilled in the art will recognize that a wide variety of modifications, alterations, and combinations can be made with respect to the above described embodiments without departing from the spirit and scope of the disclosed concept, and that such modifications, alterations, and combinations are to be viewed as being within the ambit of the inventive concept. As but one illustrative example in these regards, these teachings will accommodate only store a user's inputs (such as, for example, an assertion of a button denoted as "A," assertion of the up-arrow key, and so forth) in memory and responding as described herein by undoing such stored assertions back, for example, to a specified timestamp (akin to a web browser's "Back" button).

## Claims

1. A method comprising:
automatically storing (201) information regarding user-interface interactions for a portable device (100, 300); and
in response to detecting (203) holstering of the portable device, automatically using the information to revert (205) to an earlier user-interface interaction-directed state when at least one reversion criterion (204) is also met.

2. The method of claim 1 wherein using the information comprises, at least in part, deleting at least some of the information from storage to thereby identify the earlier user-interface interaction-directed state.

3. The method of claim 2 wherein the at least one reversion criterion comprises a duration of time, such that deleting at some of the information from storage comprises, at least in part, deleting the information for user-interface interactions that occurred prior to detecting the holstering the portable device and within the duration of time.

4. The method of claim 1 wherein storing information comprises storing information that identifies particular user-interface interactions.

5. The method of claim 4 wherein storing information further comprises storing a timestamp for each of at least some of the particular user-interface interactions.

6. The method of claim 5 wherein automatically using the information to revert to an earlier user-interface interaction-directed state comprises using the timestamp to identify the particular user-interface interaction to be used to determine the earlier user-interface interaction-directed state.

7. The method of claim 6 wherein the at least one reversion criterion corresponds to a duration of time and wherein using the timestamp to identify the particular user-interface interaction to be used to determine the earlier user-interface interaction-directed state comprises using the timestamp to identify a particular user-interface interaction that has a predetermined relationship with respect to the duration of time.

8. An apparatus (100) comprising:
a memory (110);
a user interface (118);
a sensor (134); and
a control circuit (102) operably coupled to the memory, the user interface, and the sensor and configured to:
store information (201) in the memory regarding user-interface interactions; and
respond to detection (203) by the sensor of holstering the apparatus, using the information to revert (205) to an earlier user-interface interaction-directed state when at least one reversion criterion (204) is also met.

9. The apparatus of claim 8 wherein the control circuit is configured to use the information by, at least in part, deleting at least some of the information from the memory to thereby identify the earlier user-interface interaction-directed state.

10. The apparatus of claim 9 wherein the at least one reversion criterion comprises a duration of time, and wherein the control circuit is configured to delete at some of the information from storage by, at least in part, deleting the information for user-interface interactions that occurred prior to detecting the holstering the apparatus and within the duration of time.

11. The apparatus of claim 8 wherein the control circuit is configured to store information in the memory by storing information that identifies particular user-interface interactions.

12. The apparatus of claim 11 wherein the control circuit is further configured to store the information by storing a timestamp for each of at least some of the particular user-interface interactions.

13. The apparatus of claim 12 wherein the control circuit is configured to use the information to revert to an earlier user-interface interaction-directed state by using the timestamp to identify the particular user-interface interaction to be used to determine the earlier user-interface interaction-directed state.

14. The apparatus of claim 13 wherein the at least one reversion criterion corresponds to a duration of time and wherein the control circuit is configured to use the timestamp to identify the particular user-interface interaction to be used to determine the earlier user-interface interaction-directed state by using the timestamp to identify a particular user-interface interaction that has a predetermined relationship with respect to the duration of time.

15. The apparatus of claim 8 wherein the apparatus comprises a portable communication device.
